# EUROPEAN PATENT SPECIFICATION

(11) **EP 3 409 411 B1**
(45) Date of publication and mention of the grant of the patent: **22.07.2020**
(21) Application number: 17823780.6
(22) Date of filing: 05.01.2017
(51) Int. Cl.: G21C 13/036, G21C 17/017, G21C 19/20, G21C 21/00, B23K 31/00, B23K 9/02, B23K 9/04

(54) **MANUFACTURING METHOD FOR WELDING A NOZZLE TO A PARENT MATERIAL**
HERSTELLUNGSVERFAHREN ZUM SCHWEISSEN EINER DÜSE AN EINEN GRUNDWERKSTOFF
PROCÉDÉ DE FABRICATION POUR LE SOUDAGE D'UNE BUSE SUR UN MATÉRIAU DE BASE

(30) Priority: 07.07.2016 JP 2016135132
(43) Date of publication of application: 05.12.2018
(73) Proprietor: Mitsubishi Heavy Industries, Ltd., Tokyo 108-8215 (JP)
(72) Inventor: NISHI, Wataru, Tokyo 108-8215 (JP); CASTRO, Fidel, Tokyo 108-8215 (JP)
(74) Representative: Cabinet Beau de Loménie
(86) International application number: PCT/JP2017/000118
(87) International publication number: WO 2018/008169

(56) References cited:
- JP-A- S5 465 819
- JP-A- S59 229 284
- JP-A- S59 229 284
- JP-A- 2012 045 639
- US-A- 2 981 556

## Description

### Field

The present invention relates to a nozzle welding method, a nozzle inspection method, and a nozzle manufacturing method.

### Background

Conventionally, an automatic nozzle welding method for automatically welding a pipe body and a nozzle has been known as a nozzle welding method (for example, see Patent Literature 1, Patent Literature 2 and Patent Literature 3). In this automatic nozzle welding method, a groove for butt welding is formed on the pipe body. The nozzle is integrally formed with a projecting head portion formed in a cylinder shape and a welded portion continued to the lower end of the head portion, and a groove for butt welding is formed at the outer periphery of the welded portion so as to face the groove of the pipe body. The automatic welding is performed on a groove formed between the groove of the pipe body and the groove of the welded portion of the nozzle. Consequently, a volumetric inspection such as radiographic testing and ultrasonic testing can be performed on the welded portion, which is welded by automatic welding.

### Citation List

### Patent Literature

Patent Literature 1: Japanese Patent Application Laid-open No. Hll-320092
Patent Literature 2: JPS59229284
Patent Literature 3: JP2012045639

### Summary

### Technical Problem

However, in Patent Literature 1, for causing the welded portion of the nozzle to face the pipe body that is a parent material, a groove with a large opening needs to be formed. When an area where the welded portion is formed is increased, an area to be inspected of the welded portion is also increased. An inspection request of the welded portion becomes severe with an increase in the size of the area to be inspected. When the area to be inspected of the welded portion is increased, the inspection cost may also be increased. In particular, when a plurality of head portions of the nozzle are arranged adjacent to each other, the size of the welded portion continued to the head portions is increased. Consequently, the inspection cost tends to increase.

It is an object of the present invention to provide a nozzle welding method, a nozzle inspection method, and a nozzle manufacturing method capable of suitably performing inspection, while suppressing an influence on a parent material caused by welding the nozzle.

### Solution to Problem

A nozzle manufacturing method of the present invention is defined in claim 1, and is a nozzle manufacturing method for welding a nozzle to a parent material. The nozzle manufacturing method includes a forming step of forming a portion including a surface to be inspected so that the portion projects from a front surface of the parent material; a first inspection step of inspecting the surface to be inspected of the formed portion; a base processing step of processing the formed portion into a base of the nozzle; and a base material welding step of welding the base and a nozzle base material to be a base material of the nozzle to form a nozzle welded portion; and a second inspection step of inspecting the nozzle welded portion.

With this configuration, at the forming step, a portion is formed into a predetermined shape suitable for a first inspection. Consequently, it is possible to suitably inspect the base included in the formed portion in the first inspection. For example, the first inspection is a volumetric inspection, and in the first inspection, at least the base is inspected, and the whole formed portion need not be inspected. This is because the formed portion excluding a portion that is to be formed into the base will be removed at the base processing step. Moreover, the nozzle welded portion is formed at a position (separated position) projecting from the front surface of the parent material. Consequently, it is possible to easily perform a second inspection such as the volumetric inspection, and suitably inspect the nozzle welded portion. In this manner, it is possible to suitably perform the first inspection and the second inspection, while suppressing an influence on the parent material caused by welding the nozzle. The nozzle base material is not particularly limited, and may be a base material serving as a base of the nozzle, or the nozzle itself. The parent material is not particularly limited, and may be a pipe, a plate material, or a vessel.

Furthermore, the formed portion includes a surface to be inspected on which the first inspection is performed, and the surface to be inspected includes a flat surface in parallel with an orthogonal surface orthogonal to a projection direction toward which the formed portion projects from the front surface of the parent material.

With this configuration, the surface to be inspected is a flat surface. Consequently, it is possible to easily perform the first inspection, and more suitably inspect the formed portion.

Furthermore, it is preferable that the formed portion is formed into a shape in which the projection direction toward which the formed portion projects from the front surface of the parent material is an axial direction.

With this configuration, the formed portion may be formed into a simple shape suitable for the first inspection. Moreover, because the shape of the formed portion is simple, it is possible to easily form the formed portion. The shape of the formed portion may be a columnar shape such as a cylinder shape.

According to a non-claimed embodiment, the forming step is a buttered-welding forming step of performing buttered-welding on the parent material to form the formed portion.

With this configuration, it is possible to suitably form the formed portion on the parent material, by buttered-welding applied to the parent material.

The forming step is a forging forming step of forging the parent material and the formed portion in an integral manner.

With this configuration, it is possible to suitably form the formed portion on the parent material, by forging the parent material and the formed portion in an integral manner.

Furthermore, it is preferable that the base has an end surface at a tip end side in a projection direction toward which the base projects from the front surface of the parent material, the nozzle base material has a shape having a same exterior as the end surface of the base, and at the base material welding step, the end surface of the base and the exterior of the nozzle base material are aligned with and welded to each other.

With this configuration, it is possible to align the height of the outer peripheral surface of the base with the height of the outer peripheral surface of the nozzle base material. Consequently, for example, when both radiographic testing and ultrasonic testing are performed at the second inspection, the nozzle welded portion formed between the base and the nozzle base material can be formed into a shape suitable for the tests. More specifically, for example, the shape of the end surface of the base is a circular shape, and the shape of the nozzle base material having the same exterior as the end surface of the base is a cylinder shape having the same diameter as the end surface of the base. By overlapping the center of the base and the center of the nozzle base material, the height of the outer peripheral surface of the base and the height of the outer peripheral surface of the nozzle base material can be aligned in the radial direction orthogonal to the center.

Furthermore, it is preferable that further included is a flow channel forming step of forming an internal flow channel extending from the parent material to the nozzle base material via the base and the nozzle welded portion, after the base material welding step and before the second inspection.

With this configuration, the internal flow channel is formed before the second inspection is performed. Consequently, it is possible to remove the portion where the internal flow channel is placed in the nozzle welded portion on which the second inspection need not be performed in advance. Moreover, the second inspection can be performed by using the internal flow channel. Thus, it is possible to improve the inspectability. In other words, the flow channel diameter of the internal flow channel is preferably capable of performing the second inspection, and for example, about 15 mm.

Furthermore, it is preferable that further included is a design shape processing step of processing the base, the nozzle welded portion, and the nozzle base material into the base, the nozzle welded portion, and the nozzle that are to be a predesigned design shape, after the base material welding step.

With this configuration, at the design shape processing step, the base, the nozzle welded portion, and the nozzle base material on which the first inspection and the second inspection are performed can be processed into the final shape of the base, the nozzle welded portion, and the nozzle.

A nozzle inspection method of the present disclosure is a nozzle inspection method performed when a nozzle is welded to a parent material. The nozzle inspection method includes a first inspection step of inspecting a portion formed to project from a front surface of the parent material; and a second inspection step of inspecting a nozzle welded portion that is formed by processing the formed portion into a base of the nozzle, and by welding the processed base with a nozzle base material serving as a base material of the nozzle.

Furthermore, a nozzle manufacturing method of the present disclosure is a nozzle manufacturing method for manufacturing a nozzle joined to a parent material by welding the nozzle on the parent material. The nozzle manufacturing method includes a forming step of forming a portion so that the portion projects from a front surface of the parent material; a first inspection step of inspecting the formed portion; a base processing step of processing the formed portion as a base of the nozzle; a base material welding step of welding the base and a nozzle base material serving as a base material to form a nozzle welded portion between the base and the nozzle base material; and a second inspection step of inspecting the nozzle welded portion.

With this configuration, at the first inspection step, the base included in the formed portion in a predetermined shape suitable for the first inspection can be suitably inspected. Moreover, at the second inspection step, the nozzle welded portion formed on the position projecting from the front surface of the parent material can be suitably inspected. Consequently, it is possible to suitably detect abnormality such as an internal defect generated in the base and the nozzle welded portion.

### Brief Description of Drawings

FIG. 1 is a sectional view illustrating a design shape of a parent material and a nozzle according to a first embodiment.
FIG. 2 is a sectional view illustrating a first inspection shape of the parent material and the nozzle according to the first embodiment.
FIG. 3 is a sectional view illustrating a second inspection shape of the parent material and the nozzle according to the first embodiment.
FIG. 4 is an explanatory diagram relating to a nozzle welding method and a nozzle inspection method according to the first embodiment.
FIG. 5 is an explanatory diagram relating to the nozzle welding method and the nozzle inspection method according to the first embodiment.
FIG. 6 is an explanatory diagram relating to a nozzle welding method and a nozzle inspection method according to a second embodiment.

### Description of Embodiments

Hereinafter, embodiments according to the present invention will be described in detail with reference to the accompanying drawings. It is to be understood that this invention is not limited to the embodiments. Moreover, components in the embodiments described below include components that can be easily replaced by a person skilled in the art, or components substantially the same as those components. Furthermore, the components described below can be combined with one another as appropriate. Still furthermore, when there are a plurality of embodiments, the embodiments may be combined with one another.

### First Embodiment

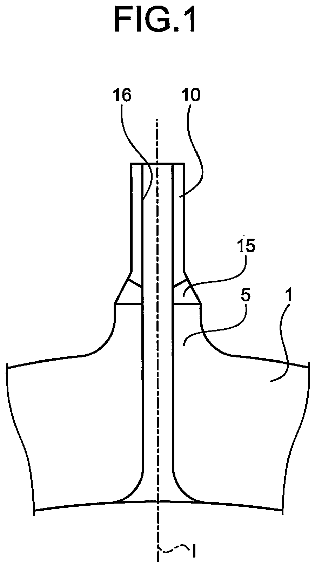

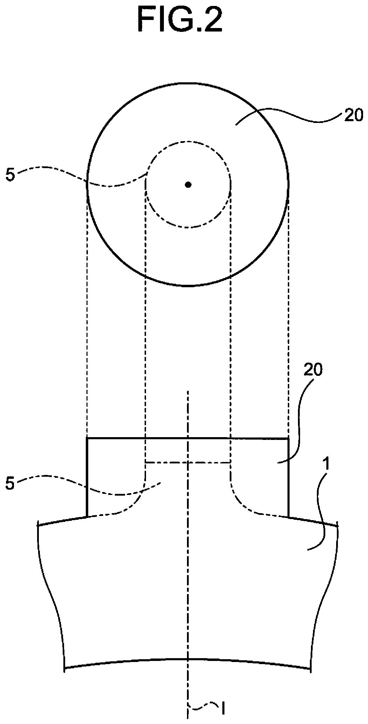

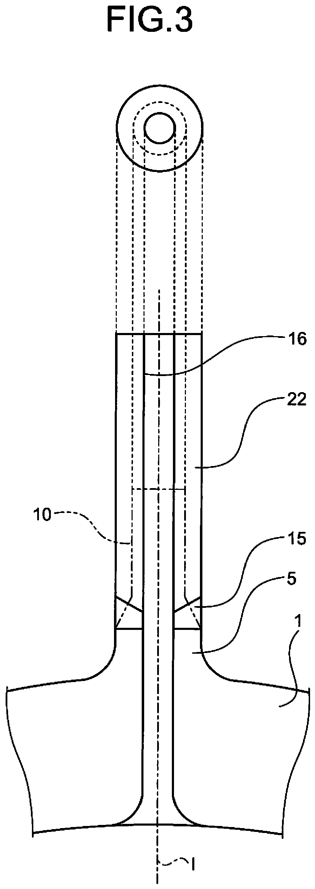

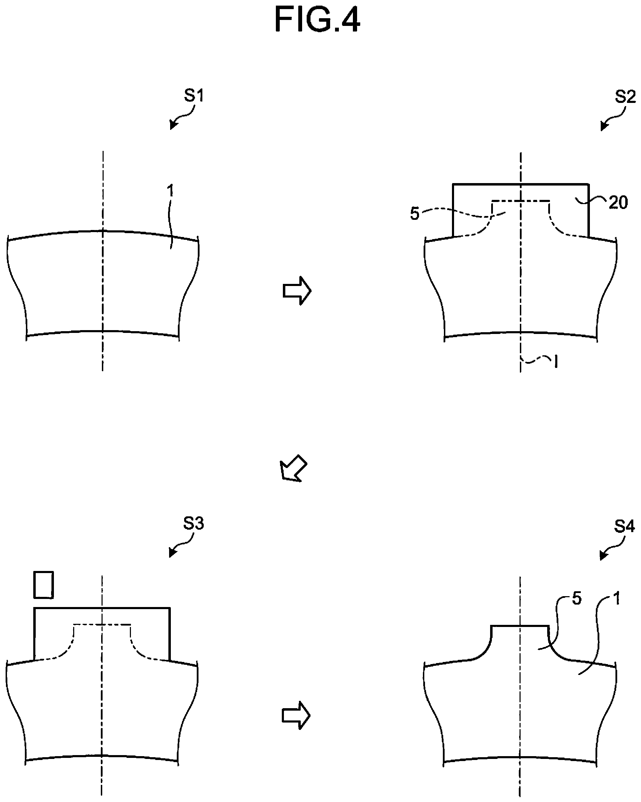

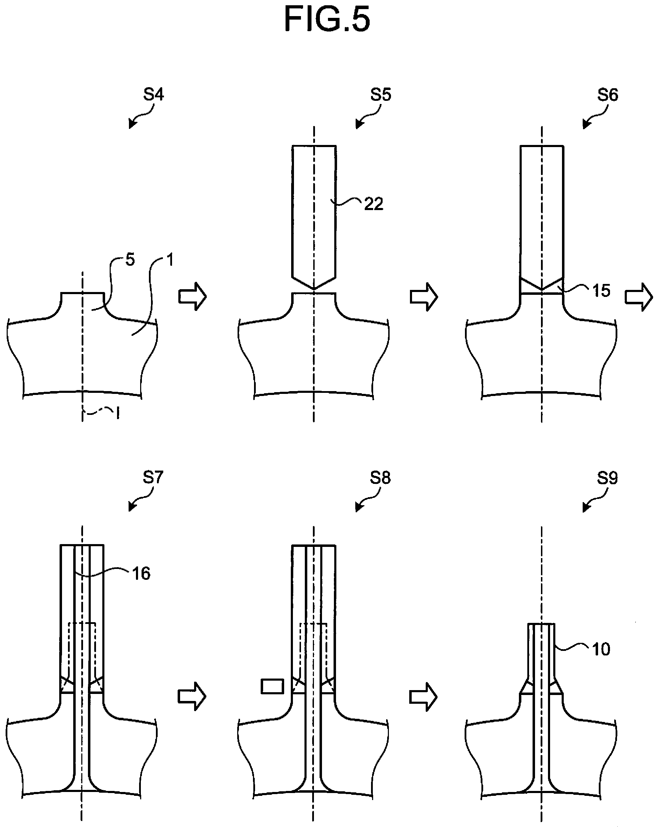

FIG. 1 is a sectional view illustrating a design shape of a parent material and a nozzle according to a first embodiment. FIG. 2 is a sectional view illustrating a first inspection shape of the parent material and the nozzle according to the first embodiment. FIG. 3 is a sectional view illustrating a second inspection shape of the parent material and the nozzle according to the first embodiment. FIG. 4 and FIG. 5 are each an explanatory diagram relating to a nozzle welding method and a nozzle inspection method according to the first embodiment.

A nozzle 10 illustrated in FIG. 1 is a nozzle formed into a predesigned design shape, which is the final shape of the nozzle 10. The nozzle 10 is fixed to a parent material 1, when the nozzle 10 is welded to a base 5 formed on the parent material 1. For example, the nozzle 10 is provided in a plant through which high-temperature and high-pressure fluid flows. The plant includes a thermal power generation plant, an atomic power generation plant, or the like.

For example, the parent material 1 is a vessel or a main pipe through which fluid flows, and has a cylindrical portion elongated in the axial direction. Thus, the outer peripheral surface of the parent material 1 has a curved surface having a predetermined curvature radius. The parent material 1 is not particularly limited to the vessel or the main pipe having a cylindrical portion, and may also be formed in a plate shape.

The base 5 is a portion projecting toward the outside in the radial direction from the outer peripheral surface of the parent material 1. The base 5 is formed by buttered-welding applied to the parent material 1, or by being forged with the parent material 1 in an integral manner. More specifically, the base 5 is formed by removing an excess portion by machining from a portion 20 to be formed illustrated in FIG. 2 that is in a state before being processed. The formed portion 20 will be described below. The base 5 is formed in a cylinder shape, and the axial direction of a center axis I of the base 5 is the normal direction of the outer peripheral surface of the parent material 1. In other words, the direction toward which the base 5 projects from the outer peripheral surface of the parent material 1 is the normal direction of the outer peripheral surface of the parent material 1 overlapping with the center axis I of the base 5. The sectional shape of the base 5 cut along the surface perpendicular to the axial direction is formed in a circular shape (annular shape), and the outer diameter of the section of the base 5 is larger than the outer diameter of the nozzle 10, which will be described below. A corner portion that is a predetermined curved surface is formed on the base 5 from the tip end side toward the base end side (parent material 1 side) in the direction toward which the base 5 projects.

The nozzle 10 is formed in a cylinder shape extending along the axial direction of the center axis I, and is disposed on the same axis as the center axis I of the base 5. The outer diameter of the nozzle 10 is smaller than that of the base 5. Moreover, the nozzle 10 is welded to the base 5, and a nozzle welded portion 15 is formed between the base 5 and the nozzle 10. The nozzle welded portion 15 is formed in a tapered shape such that the outer diameter is increased from the nozzle 10 toward the base 5. The nozzle welded portion 15 is subjected to inspection, and for example, a volumetric inspection is performed on the nozzle welded portion 15. The inspection performed on the nozzle welded portion 15 is referred to as a second inspection.

An internal flow channel 16 is formed inside a portion extending from the parent material 1 to the nozzle 10 via the base 5 and the nozzle welded portion 15. The internal flow channel is formed straight along the center axis I of the base 5 and the nozzle 10. For example, the flow channel diameter of the internal flow channel is about 15 mm, and such that the internal flow channel can be used for the volumetric inspection, which will be described below.

Next, the formed portion 20 described above will be explained with reference to FIG. 2. As illustrated in FIG. 2, the formed portion 20 formed on the parent material 1 is in a state before the base 5 is being processed as illustrated in FIG. 1. The formed portion 20 is a portion projecting toward the outside in the radial direction from the outer peripheral surface of the parent material 1. The formed portion 20 is subjected to inspection, and for example, the volumetric inspection is performed on the formed portion 20. The inspection performed on the formed portion 20 is referred to as a first inspection.

The formed portion 20 has a predetermined inspection shape allowing the first inspection to be suitably performed. In other words, the formed portion 20 has a surface to be inspected on which the first inspection is performed. The surface to be inspected includes a flat surface that is in parallel with an orthogonal surface orthogonal to the direction (axial direction of the center axis I) toward which the formed portion 20 projects from the front surface of the parent material 1. More specifically, the formed portion 20 is formed in a cylinder shape extending along the axial direction of the center axis I, and includes a flat end surface formed in a circular shape that is formed at the tip end side of the formed portion 20 in the axial direction, and a side surface formed in the circumferential direction around the center axis I. The end surface and the side surface of the formed portion 20 are surfaces to be inspected.

The formed portion 20 is formed as a mass larger than the base 5. Thus, the end surface and the side surface of the formed portion 20 are formed outside of the end surface and the side surface of the base 5. Moreover, similar to the base 5, the formed portion 20 is formed by buttered-welding applied to the parent material 1, or by being forged with the parent material 1 in an integral manner.

The following describes a nozzle base material 22 that is a base material of the nozzle 10 to be welded to the base 5 with reference to FIG. 3. As illustrated in FIG. 3, the nozzle base material 22 joined on the base 5 is in a state before the nozzle 10 is being processed as illustrated in FIG. 1. The nozzle base material 22 illustrated in FIG. 3 is formed with the internal flow channel 16, and the shape of the internal flow channel 16 before being processed is formed in a cylinder shape disposed on the same axis as the center axis I of the base 5 as illustrated in FIG. 5. Moreover, the nozzle base material 22 is formed larger than the nozzle 10, and formed in a cylinder shape having the same diameter as that of the end surface of the base 5. Furthermore, the nozzle base material 22 is formed in a tapered shape such that the base 5 side in the axial direction is tapered toward the base 5 side.

The center axis I of the nozzle base material 22 and the center axis I of the base 5 are welded to each other in an overlapping manner, and the outer peripheral surface of the nozzle base material 22 and the outer peripheral surface of the base 5 after being welded become the same surface. In other words, the generatrix of the nozzle base material 22 and the base 5 after being welded formed into a cylinder shape is a straight line. The second inspection is performed on the nozzle welded portion 15 formed between the base 5 and the nozzle base material 22, before the nozzle base material 22 is processed into the nozzle 10. This is because, as described above, the second inspection can be suitably performed with the generatrix of the nozzle base material 22 and the base 5 after being welded being a straight line. In other words, the nozzle welded portion 15 illustrated in FIG. 3 has an inspection shape allowing the second inspection to be suitably performed.

The following describes a welding method for welding the nozzle 10 to the parent material 1 and an inspection method performed while the nozzle 10 is welded to the parent material 1 with reference to FIG. 4 and FIG. 5. Consequently, a manufacturing method for manufacturing the nozzle 10 joined to the parent material 1 will also be described. In other words, the manufacturing method of the nozzle 10 includes the welding method of the nozzle 10 and the inspection method of the nozzle 10. Hereinafter, a description will be made on a case in which the formed portion 20 is formed by buttered-welding applied to the parent material 1.

As illustrated in FIG. 4, the outer peripheral surface of the parent material 1 before the formed portion 20 is formed has a predetermined curvature radius (step S1). The formed portion 20 is formed in a cylinder shape on the parent material 1 by buttered-welding applied thereto (step S2: buttered-welding forming step). At the buttered-welding forming step S2, the formed portion 20 is formed so that the axial direction of the center axis I of the formed portion 20 can be in the normal direction of the outer peripheral surface of the parent material 1.

After the buttered-welding forming step S2 is performed, a first inspection is performed on the formed portion 20 (step S3: first inspection step). At the first inspection step S3, the volumetric inspection is performed on the formed portion 20 as the first inspection. At least one of radiographic testing and ultrasonic testing is performed as the volumetric inspection. The volumetric inspection is carried out to inspect whether an internal defect is generated in the base 5 scraped out from the formed portion 20, and to inspect the whole volume of the base 5. At the first inspection step S3, one of the radiographic testing and the ultrasonic testing is performed, and when it is suspected that an internal defect is generated in the base 5, the other of the radiographic testing or the ultrasonic testing will be performed. At the first inspection step S3, the volumetric inspection is performed at least on the base 5. In other words, the volumetric inspection need not be performed to the whole formed portion 20. This is because the formed portion 20 excluding a portion that is to be formed into the base 5 will be removed at base processing step S4, which will be described below.

After the first inspection step S3 is performed, when the base 5 is intact, in other words, when an internal defect is not detected in the base 5, the formed portion 20 is processed as the base 5 of the nozzle 10 (step S4: base processing step). In other words, at the base processing step S4, the base 5 is sculpted out from the formed portion 20 by scraping off the formed portion excluding a portion that is to be formed into the base 5.

Subsequently, as illustrated in FIG. 5, the base 5 is formed on the parent material 1 (step S4). The base 5 and the nozzle base material 22 are installed so that the end surface of the base 5 in the axial direction and the end portion of the nozzle base material 22 at the tapered side in the axial direction can face each other, and the center axis I of the base 5 and the center axis I of the nozzle base material 22 can be overlapped with each other (step S5). Consequently, the circular end surface of the base 5 and the circular exterior of the nozzle base material 22 are aligned with each other. Then, the nozzle welded portion 15 is formed by welding a groove formed between the base 5 and the nozzle base material 22 (step S6: base material welding step).

After the base material welding step S6 is performed, the internal flow channel 16 extending from the parent material 1 to the nozzle base material 22 via the base 5 and the nozzle welded portion 15 is formed (step S7: flow channel forming step). At the flow channel forming step S7, the internal flow channel 16 is penetrated along the center axis I by machining. By forming the internal flow channel 16 at the flow channel forming step S7, it is possible to remove a portion on which the second inspection need not be performed from the nozzle welded portion 15. Moreover, it is possible to perform the second inspection by using the internal flow channel 16.

After the flow channel forming step S7 is performed, the second inspection is performed on the nozzle welded portion 15 (step S8: second inspection step). At the second inspection step S8, the volumetric inspection the same as the first inspection is performed on the nozzle welded portion 15 as the second inspection.

After the second inspection step S8 is performed, when the nozzle welded portion 15 is intact, in other words, when an internal defect is not detected in the nozzle welded portion 15, the base 5, the nozzle welded portion 15, and the nozzle base material 22 are processed into the design shape illustrated in FIG. 1 that is predesigned (step S9: design shape processing step). In other words, at the design shape processing step S9, the base 5, the nozzle welded portion 15, and the nozzle base material 22 after the second inspection step S8 is performed are processed into the base 5, the nozzle welded portion 15, and the nozzle 10 illustrated in FIG. 1. More specifically, at the design shape processing step S9, the nozzle base material 22 is processed into the nozzle 10, by cutting off the end portion of the nozzle base material 22 in the axial direction by machining, and scraping off the outer peripheral surface of the nozzle base material 22 so that the outer diameter of the nozzle base material 22 can be narrowed by machining. Moreover, at the design shape processing step S9, the nozzle welded portion 15 is processed into a tapered shape such that the outer diameter is increased from the nozzle 10 toward the base 5 by machining. The parent material 1 on which the nozzle 10 formed into the design shape is welded is manufactured by performing the design shape processing step S9.

In this manner, according to the first embodiment, it is possible to form the formed portion 20 into the inspection shape suitable for the first inspection at the buttered-welding forming step S2. Thus, it is possible to suitably inspect the base 5 included in the formed portion 20 at the first inspection step S3. Because the nozzle welded portion 15 is formed at a position (separated position) projecting from the front surface of the parent material 1, it is possible to easily perform the second inspection step S8, and suitably inspect the nozzle welded portion 15. In this manner, it is possible to suitably perform the first inspection step S3 and the second inspection step S8, while suppressing an influence on the parent material 1 caused by welding the nozzle 10.

Moreover, according to the first embodiment, the circular-shaped end surface of the formed portion 20, which is the surface to be inspected, is made into a flat surface. Thus, it is possible to easily perform the first inspection step S3, and more suitably inspect the formed portion 20.

Furthermore, according to the first embodiment, the end surface of the formed portion 20 is formed into a circular shape so as to have a simple shape suitable for the first inspection. This simple shape makes it possible to easily form the formed portion 20.

Still furthermore, according to the first embodiment, the formed portion 20 can be suitably formed on the parent material 1, by buttered-welding applied to the parent material 1 at the buttered-welding forming step S2.

Still furthermore, according to the first embodiment, the outer diameter of the end surface of the base 5 and the outer diameter of the nozzle base material 22 are made the same. Thus, it is possible to align the height to the outer peripheral surface of the base 5 with the height to the outer peripheral surface of the nozzle base material 22 in the radial direction perpendicular to the center axis I. Consequently, for example, when both radiographic testing and ultrasonic testing are performed at the second inspection step S8, the nozzle welded portion 15 formed between the base 5 and the nozzle base material 22 can be formed into the shape suitable for the tests.

Still furthermore, according to the first embodiment, the internal flow channel 16 can be formed by performing the flow channel forming step S7 before the second inspection step S8 is performed. Thus, it is possible to remove a portion where the internal flow channel 16 is placed in the nozzle welded portion 15 on which the second inspection need not be performed in advance. Because the second inspection can be performed by using the internal flow channel 16, it is also possible to improve the inspectability.

Still furthermore, according to the first embodiment, the base 5, the nozzle welded portion 15, and the nozzle base material 22 on which the first inspection step S3 and the second inspection step S8 are performed can be processed into the base 5, the nozzle welded portion 15, and the nozzle 10 that are intact and formed into the final design shape at the design shape processing step S9.

Still furthermore, according to the first embodiment, it is possible to suitably inspect the base 5 included in the formed portion 20 that has the inspection shape suitable for the first inspection at the first inspection step S3. It is also possible to suitably inspect the nozzle welded portion 15 formed on the position projecting from the front surface of the parent material 1 at the second inspection step S8. Consequently, it is possible to suitably detect abnormality such as an internal defect generated in the base 5 and the nozzle welded portion 15.

In the first embodiment, the formed portion 20 is formed by buttered-welding applied at the buttered-welding forming step S2. However, a forging forming step may also be used instead of the buttered-welding forming step S2. In other words, in the forging forming step, the parent material 1 and the formed portion 20 are formed by forging in an integral manner. Then, the parent material 1 and the formed portion 20 formed by forging are inspected at the first inspection step S3.

Still furthermore, in the first embodiment, the second inspection step S8 is performed after the flow channel forming step S7. However, the second inspection step S8 may also be performed before the flow channel forming step S7 is performed, in other words, at step S6 in FIG. 5.

Still furthermore, in the first embodiment, the second inspection step S8 is performed before the design shape processing step S9 is performed. However, the second inspection step S8 may also be performed after the design shape processing step S9 is performed, in other words, at step S9 in FIG. 5.

Still furthermore, in the first embodiment, the end surface and the side surface of the formed portion 20 are formed outside of the end surface and the side surface of the base 5. However, the end surface and the side surface of the formed portion 20, and the end surface and the side surface of the base 5 may be formed on the same surface.

Still furthermore, in the first embodiment, a base material serving as a base of the nozzle 10 that is formed larger than the nozzle 10 is used as the nozzle base material 22. However, it is not limited thereto, and the nozzle 10 itself may also be used as the nozzle base material 22.

### Second Embodiment

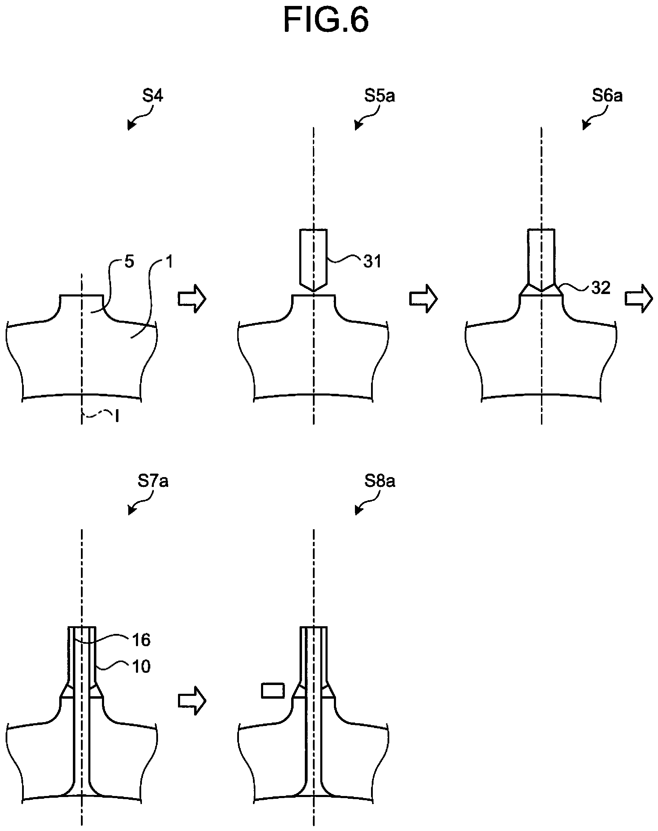

The following describes a welding method of the nozzle 10 and an inspection method of the nozzle 10 according to a second embodiment with reference to FIG. 6. In the second embodiment, to prevent repetition, only a portion different from the first embodiment will be described, and the same portions as those in the first embodiment are denoted by the same reference numerals. FIG. 6 is an explanatory diagram relating to a nozzle welding method and a nozzle inspection method according to the second embodiment.

In the manufacturing method including the welding method of the nozzle 10 and the inspection method of the nozzle 10 of the second embodiment, a nozzle base material 31 having a smaller diameter than that of the nozzle base material 22 used in the first embodiment is used. The nozzle base material 31 used in the second embodiment is formed in a cylinder shape having the same outer diameter as that of the nozzle 10. Similar to the first embodiment, the nozzle base material 31 is formed in a tapered shape in which the end portion at the base 5 side facing the end surface of the base 5 is tapered toward the base 5 side.

To use the nozzle base material 31 such as the above in the manufacturing method of the nozzle 10, as illustrated in FIG. 6, when the base 5 is formed on the parent material 1 (step S4), the base 5 and the nozzle base material 31 are installed so that the end surface of the base 5 in the axial direction and the end portion of the nozzle base material 31 at the tapered side in the axial direction can face with each other, and the center axis I of the base 5 and the center axis I of the nozzle base material 31 can be overlapped with each other (step S5a). A nozzle welded portion 32 is then formed by welding a groove formed between the base 5 and the nozzle base material 31 (step S6a: base material welding step). The nozzle welded portion 32 is formed such that the outer diameter is increased from the nozzle base material 31 toward the base 5, because the outer diameters of the base 5 and the nozzle base material 31 are different from each other.

After the base material welding step S6a is performed, the internal flow channel 16 extending from the parent material 1 to the nozzle base material 31 via the base 5 and the nozzle welded portion 32 is formed (step S7a: flow channel forming step). After the flow channel forming step S7a is performed, a second inspection is performed on the nozzle welded portion 32 (step S8a: second inspection step). At the second inspection step S8a, the nozzle welded portion 32 is formed in a tapered shape. Thus, it is preferable to perform radiographic testing as the volumetric inspection.

In this manner, according to the second embodiment, the nozzle base material 31 in the second embodiment need not be processed as the nozzle base material 22 in the first embodiment. Consequently, it is possible to simplify the manufacturing method.

### Reference Signs List

- 1: Parent material
- 5: Base
- 10: Nozzle
- 15: Nozzle welded portion
- 16: Internal flow channel
- 20: Formed portion
- 22: Nozzle base material
- 31: Nozzle base material (second embodiment)
- 32: Nozzle welded portion (second embodiment)
- I: Center axis

## Claims

1. A nozzle manufacturing method for welding a nozzle (10) to a parent material, the nozzle welding method comprising:
a forming step of forming a formed portion (20) including a surface to be inspected so that the portion projects from a front surface of the parent material;
a first inspection step of inspecting the surface to be inspected of the formed portion (20);
a base processing step of processing the formed portion (20) into a base (5) of the nozzle;
a base material welding step of welding the base (5) and a nozzle base material (22, 31) to be a base material of the nozzle (10) to form a nozzle welded portion (15); and
a second inspection step of inspecting the nozzle welded portion (15), wherein
the forming step is a forging forming step of forging the parent material and the formed portion (20) in an integral manner.

2. The nozzle manufacturing method according to claim 1, wherein
the surface to be inspected includes a flat surface in parallel with an orthogonal surface orthogonal to a projection direction toward which the formed portion (20) projects from the front surface of the parent material.

3. The nozzle manufacturing method according to claim 2, wherein the formed portion (20) is formed into a shape in which the projection direction toward which the formed portion (20) projects from the front surface of the parent material is an axial direction.

4. The nozzle manufacturing method according to any one of claims 1 to 3, wherein
the base (5) has an end surface at a tip end side in a projection direction toward which the base (5) projects from the front surface of the parent material,
the nozzle base material (22, 31) has a shape having a same exterior as the end surface of the base (5), and
at the base material welding step, the end surface of the base (5) and the exterior of the nozzle base material (22, 31) are aligned with and welded to each other.

5. The nozzle manufacturing method according to any one of claims 1 to 4, further comprising a flow channel forming step of forming an internal flow channel extending from the parent material to the nozzle base material (22, 31) via the base and the nozzle welded portion, after the base material welding step and before the second inspection.

6. The nozzle manufacturing method according to any one of claims 1 to 5, further comprising a design shape processing step of processing the base (5), the nozzle welded portion (15), and the nozzle base material (22, 31) into the base (5), the nozzle welded portion (15), and the nozzle (10) that are to be a predesigned design shape, after the base material welding step.

## Patentansprüche

1. Düsenherstellungsverfahren zum Schweißen einer Düse (10) an ein Ausgangsmaterial, wobei das Düsenschweißverfahren Folgendes umfasst:
einen Bildungsschritt zum Bilden eines gebildeten Abschnitts (20), der eine zu prüfende Fläche beinhaltet, derart, dass der Abschnitt von einer vorderen Fläche des Ausgangsmaterials vorsteht;
einen ersten Prüfschritt zum Prüfen der zu prüfenden Fläche des gebildeten Abschnitts (20);
einen Basisverarbeitungsschritt zum Verarbeiten des gebildeten Abschnitts (20) zu einer Basis (5) der Düse;
einen Basismaterialschweißschritt zum Schweißen der Basis (5) und eines Düsenbasismaterials (22, 31), das ein Basismaterial der Düse (10) sein soll, um einen düsengeschweißten Abschnitt (15) zu bilden; und
einen zweiten Prüfschritt zum Prüfen des düsengeschweißten Abschnitts (15), wobei
der Bildungsschritt ein Schmiedebildungsschritt zum Schmieden des Ausgangsmaterials und des gebildeten Abschnitts (20) in einer integralen Weise ist.

2. Düsenherstellungsverfahren nach Anspruch 1, wobei
die zu prüfende Fläche eine ebene Fläche parallel zu einer orthogonalen Fläche orthogonal zu einer Vorsprungsrichtung, in die der gebildete Abschnitt (20) von der vorderen Fläche des Ausgangsmaterials vorsteht, beinhaltet.

3. Düsenherstellungsverfahren nach Anspruch 2, wobei der gebildete Abschnitt (20) zu einer Form gebildet wird, bei der die Vorsprungsrichtung, in die der gebildete Abschnitt (20) von der vorderen Fläche des Ausgangsmaterials vorsteht, eine Axialrichtung ist.

4. Düsenherstellungsverfahren nach einem der Ansprüche 1 bis 3, wobei
die Basis (5) in einer Vorsprungsrichtung, in die die Basis (5) von der vorderen Fläche des Ausgangsmaterials vorsteht, eine Endfläche und eine Spitzenendseite aufweist,
das Düsenbasismaterial (22, 31) eine Form mit einer selben Außenseite wie die Endfläche der Basis (5) aufweist und
die Endfläche der Basis (5) und die Außenseite des Düsenbasismaterials (22, 31) im Basismaterialschweißschritt aufeinander ausgerichtet und aneinander geschweißt werden.

5. Düsenherstellungsverfahren nach einem der Ansprüche 1 bis 4, das nach dem Basismaterialschweißschritt und vor der zweiten Prüfung ferner einen Durchflusskanalbildungsschritt zum Bilden eines internen Durchflusskanals, der sich via die Basis und den düsengeschweißten Abschnitt vom Ausgangsmaterial zum Düsenbasismaterial (22, 31) erstreckt, umfasst.

6. Düsenherstellungsverfahren nach einem der Ansprüche 1 bis 5, das nach dem Basismaterialschweißschritt ferner einen Konstruktionsformverarbeitungsschritt zum Verarbeiten der Basis (5), des düsengeschweißten Abschnitts (15) und des Düsenbasismaterials (22, 31) zur Basis (5), zum düsengeschweißten Abschnitt (15) und zur Düse (10), die eine vorkonstruierte Konstruktionsform sein sollen, umfasst.

## Revendications

1. Procédé de fabrication de buse pour souder une buse (10) à un matériau de base, le procédé de soudage de buse comprenant :
une étape de formation pour former une partie formée (20) comprenant une surface à contrôler de sorte que la partie fait saillie d'une surface avant du matériau de base ;
une première étape de contrôle pour contrôler la surface à contrôler de la partie formée (20) ;
une étape de traitement de base pour traiter la partie formée (20) dans une base (5) de la buse ;
une étape de soudage de matériau de base pour souder la base (5) et un matériau de base de buse (22, 31) pour être un matériau de base de la buse (10) afin de former une partie soudée de buse (15) ; et
une seconde étape de contrôle pour contrôler la partie soudée de buse (15), dans lequel :
l'étape de formation est une étape de formation par forgeage pour forger le matériau de base et la partie formée (20) d'une manière solidaire.

2. Procédé de fabrication de buse selon la revendication 1, dans lequel :
la surface à contrôler comprend une surface plate parallèle à une surface orthogonale, orthogonale à une direction de saillie vers laquelle la partie formée (20) fait saillie à partir de la surface avant du matériau de base.

3. Procédé de fabrication de buse selon la revendication 2, dans lequel la partie formée (20) est formée dans une forme dans laquelle la direction de saillie vers laquelle la partie formée (20) fait saillie de la surface avant du matériau de base est une direction axiale.

4. Procédé de fabrication de buse selon l'une quelconque des revendications 1 à 3, dans lequel :
la base (5) a une surface d'extrémité au niveau d'un côté d'extrémité de pointe dans une direction de saillie vers laquelle la base (5) fait saillie de la surface avant du matériau de base,
le matériau de base de buse (22, 31) a une forme ayant un même extérieur que la surface d'extrémité de la base (5), et
à l'étape de soudage de matériau de base, la surface d'extrémité de la base (5) et l'extérieur du matériau de base de buse (22, 31) sont alignés avec et soudés entre eux.

5. Procédé de fabrication de buse selon l'une quelconque des revendications 1 à 4, comprenant en outre une étape de formation de canal d'écoulement pour former un canal d'écoulement interne s'étendant du matériau de base au matériau de base de buse (22, 31), via la base et la partie soudée de buse, après l'étape de soudage de matériau de base et avant le second contrôle.

6. Procédé de fabrication de buse selon l'une quelconque des revendications 1 à 5, comprenant en outre une étape de traitement de forme de conception pour traiter la base (5), la partie soudée de buse (15) et le matériau de base de buse (22, 31) dans la base (5), la partie soudée de buse (15) et la buse (10) qui doivent avoir une forme de conception préconçue, après l'étape de soudage de matériau de base.
